# EUROPEAN PATENT SPECIFICATION

(11) **EP 1 584 063 B1**
(45) Date of publication and mention of the grant of the patent: **03.09.2008**
(21) Application number: 03815068.6
(22) Date of filing: 20.12.2003
(51) Int. Cl.: G06K 9/00, G06T 3/40, H04N 1/32

(54) **METHOD OF DISPLAYING AN IMAGE CAPTURED BY A DIGITAL**
VERFAHREN ZUR ANZEIGE EINES DIGITAL ERFASSTEN BILDES
PROCEDE D'AFFICHAGE D'UNE IMAGE CAPTUREE PAR UNE CAMERA NUMERIQUE

(30) Priority: 15.01.2003 FR 0300366
(43) Date of publication of application: 12.10.2005
(73) Proprietor: Eastman Kodak Company, Rochester, New York 14650 (US)
(72) Inventor: VAU, Jean-Marie, Kodak Industrie, 71102 Chalon-sur-Saone Cedex (FR); TOUCHARD, Nicolas, Patrice, Bernard, 71102 Chalon-sur-Saone Cedex (FR)
(74) Representative: Weber, Etienne Nicolas
(86) International application number: PCT/EP2003/014700
(87) International publication number: WO 2004/063973

(56) References cited:
- EP-A- 1 017 019
- EP-A- 1 130 506
- US-A- 5 375 203
- US-A- 5 818 417
- US-A1- 2002 071 595

## Description

### FIELD OF THE INVENTION

The present invention relates to a method of displaying a digital image, and in particular an image captured by a digital still camera. The method of display can be implemented for all types of display screens, but especially low-resolution display screens, i.e. less than the resolution of the camera, and at least less than that of the image to be displayed.

Portable communication equipment, such as mobile phones, provided with an integral image sensor, can in particular benefit from the invention. Indeed, these devices usually have a small display screen, unable to reproduce the details of a captured image.

### BACKGROUND OF THE INVENTION

As mentioned above, mobile phones provided with a camera, usually only provide modest display options. This is the same for more sophisticated digital cameras that despite a high quality lens and high-resolution sensor, are only equipped with a basic monitoring screen.

The monitoring screen, however it is, can have several functions. One of these functions can be that of a viewfinder. Then it is used to check the framing of the image to be captured. This first function can be adapted to a relatively restricted screen resolution. Another function is to enable the user to select the destination of the captured images. The destination can be saving to memory, sending the image to a remote electronic album, ordering printed proofs of the image; or, more simply, deleting the image.

Sending the image to a remote electronic album, which acts as a memory, and the ordering of the printing of photographic proofs constitute an easy and increasingly widespread solution for processing the images captured by digital cameras. Indeed printing an image on paper enables it to be reproduced with very high quality, and good resolution.

Telephones integrating an image sensor, and some digital cameras, combined with transmission means, enable easy sending to a photographic service provider of captured image data. This data transmission can prevent overloading of the camera's memory.

As an alternative, the camera's memory can also be freed by simply deleting image data, without their transmission. The decision to transmit or not an image for printing, or saving in a remote album, usually takes place just after the user has captured the image.

To make the choice between image conservation, image printing, and its deletion, the user often only has the monitoring screen integrated with the camera.

When the monitoring screen has a low resolution, i.e. less than that of the images capable of being captured by the sensor, it does not enable accurate representation of the quality of a printed photographic proof likely to be obtained. The proof quality finally obtained is not related to that of the monitoring screen but mainly to the resolution of the image capture sensor and to that of the image printing or reproduction means used to produce the proofs. The resolution of these means is very much better than that of standard monitoring screens. This can result in situations where the user decides to delete an image by reckoning that its quality or its resolution is insufficient, whereas the final proof, obtained after printing would actually be perfectly acceptable. Such situations can in particular arise when the captured image contains one or more faces of photographed people, and the framing of the faces is not close up. In this case, each face, taken individually, only occupies on the monitoring screen a limited number of pixels. The displayed image does not necessarily represent the user's photographic intention and does not show the faces satisfactorily. This difficulty arises whenever an image detail is represented with insufficient accuracy to objectively estimate the advantage of printing the image or not, of keeping it or not.

Thus the user rejects images that they could have kept and had printed.

Document EP 1,130,506 discloses a method for presenting digital images on a low definition screen in which a face detection may be carried out to define a zone of interest.

### SUMMARY OF THE INVENTION

The purpose of the invention is to propose a solution to the unfortunate situation described above.

In particular the purpose of the invention is to propose a method of display that renders with sufficient accuracy the details of an image to enable a user to assess the quality of an image with good objectivity, and hence its destination.

It is also a purpose to propose a method of display that is compatible with summary screens such as monitoring screens or screens integrated with telephones or other portable devices.

To achieve these aims, the purpose of the invention is more precisely a method as defined in claim 1.

The initial image can be captured by a digital camera having a sensor capable of supplying images with a resolution greater than that of the monitoring screen fitted to the camera.
The enlarged display of the images of the sequence, i.e. selected image portions, enables better rendering of their details. The image portions can in particular be displayed full screen. In this case, the selected portions of the initial image are enlarged to occupy on screen the same area that the entire image would occupy. Enlargement involves no deterioration of the quality of the image, or image portions, as soon as the initial image is captured with a sensor whose resolution is greater than that of the monitoring screen used for display.

So that the display of the sequence is sufficiently fast, and not disturbed by items unnecessary to the user in their choice of the destination of the captured image, the sequence is not made up with just any portions of the captured image but with image portions including a zone-of interest. Zone-of-interest means a zone capable of helping the user in their choice to reject or not the image. Such a zone is, for example, a zone of the image showing a face.

An important characteristic of the invention is also the automatic identification of the zones-of-interest. The automatic character of this identification frees the user from having to select themselves any image portions to enlarge, and avoids the risk of an erroneous judgement that the user could make in principle from the full image in which they would select the zones themselves. In particular one can prevent a situation in which the user might forego the selection of zones and a sequential display, based on a negative impression given to them by the preliminary display of the full image with low resolution. Selection by the user assumes the prior display of the entire initial image.

Finally, the display of a sequence, and not just one enlarged zone of the image, enables image-viewing time to be minimized, without compromising the information capable of being found by the user.

The first step of the method, i.e. step a), can comprise the automatic identification of image zones showing faces, to retain these zones as zones-of-interest. The identification of image zones showing faces involves a known technique. It comprises, for example, searching in images for colors that correspond to color ranges pre-defined as being skin colors, and the recognition of shapes and geometric arrangements of shapes corresponding to characteristic parts of the face such as the eyes, mouth, and nose.

Other criteria for the automatic identification of zones-of-interest can also be selected either additionally or alternatively. For example, step a) of the method can also comprise the automatic identification of zones of the initial image showing more or less unified color ranges. In this case, zones in addition to the zones showing more or less unified color ranges are selected as zones-of-interest. Such an identification method enables more generally the selection of image zones that are not just simple areas of sky, grass or ground. It can be implemented, for example, when no zone corresponding to skin colors is identified. The relative size of the unified ranges to be avoided can be pre-set.

Other criteria, such as the existence of zones of high light or color contrast, can also be selected for the automatic identification of zones-of-interest.

A frame, with fixed size, or variable according to the dimension of the identified zone-of-interest, can be used to define each image portion to select to form the sequence. The frame can be summarized by simple point or pixel coordinates that bound an image portion. It can be centered on the identified zone-of-interest, or at least surround this zone.

For an especially user-friendly viewing of the image sequence, the method also comprises automatic selection of additional image portions, not necessarily containing zones-of-interest, but located on a path linking two selected image portions and containing zones-of-interest. The insertion of these image portions into the sequence of images to be displayed enables continuous panning to be simulated between the image portions containing a zone-of-interest. Such panning is known. In this matter one can refer to the document (1) whose references are set out at the end of the description.

The number and position of the additional image portions inserted for panning can be variable. It is for example adjusted to the number of selected image portions that contain a zone-of-interest. For example, one additional image portion per selected image portion. Similarly, the panning path used can be variable. For example, the path can be the shortest straight line linking the two nearest image portions, containing a zone-of-interest. The path can also be a smoothed curved path.

All the steps of the method of display can be implemented directly in the camera used to capture the initial image. However, this requires a processor and suitable memory means. One or more method steps can also be executed remotely.

According to one perfected implementation of the method, this can include the capture of the image with the digital camera, the transmission of the image to a remote processing entity, the execution of at least one of the steps a), b) and c) in the remote processing entity, and the sending of a corresponding display command from the processing entity to a display device. The display device can be a device integrated or not with the camera. This measure enables the implementation of the method of display with devices that are not equipped with internal processing means suited to the execution of the steps of the method. The remote processing entity can be made available to users by a service provider, and especially by a provider also offering services of archiving and printing of photographic proofs. The provider can thus execute remotely the method of display.

The display command can comprise simply the instructions identifying the image portions to be displayed. Such instructions have very low data weight and are especially easy to transmit on a communication network, and especially a mobile or home telephone accessed network. They can be applied, if necessary, to the captured image data, kept temporarily in a camera memory. The identification instructions of image portions to be displayed can also be completed by the image data. These data are then retransmitted from the processing station. This then enables the display to be caused on a device that is not provided with a memory enabling the captured image to be stored temporarily. The display can also take place, in this case, on a device provided with a monitoring screen, such as a mobile phone or PDA (Personal Digital Assistant) that is separate from the camera.

As an alternative, the display command can also include image data relating only to the image portions that have to be displayed. If these portions are numerous, and especially if they include duplication, the amount of data to be transmitted from the processing entity is however larger.

The display command can also comprise other instructions such as a display order instruction of image portions, or an enlargement ratio instruction for each image portion to be displayed.

The method of the invention can be implemented by identifying zones-of-interest in a single or many initial images. In the second case, the sequence is formed with image portions from the many initial images.

Finally, and in accessory, the entire initial image can be shown in the sequence of image portions to be displayed.

Other characteristics and advantages of the invention will appear in the following description, with reference to the figure of the appended drawing. This description is given purely as an illustration and is not limiting.

### BRIEF DESCRIPTION OF THE DRAWINGS

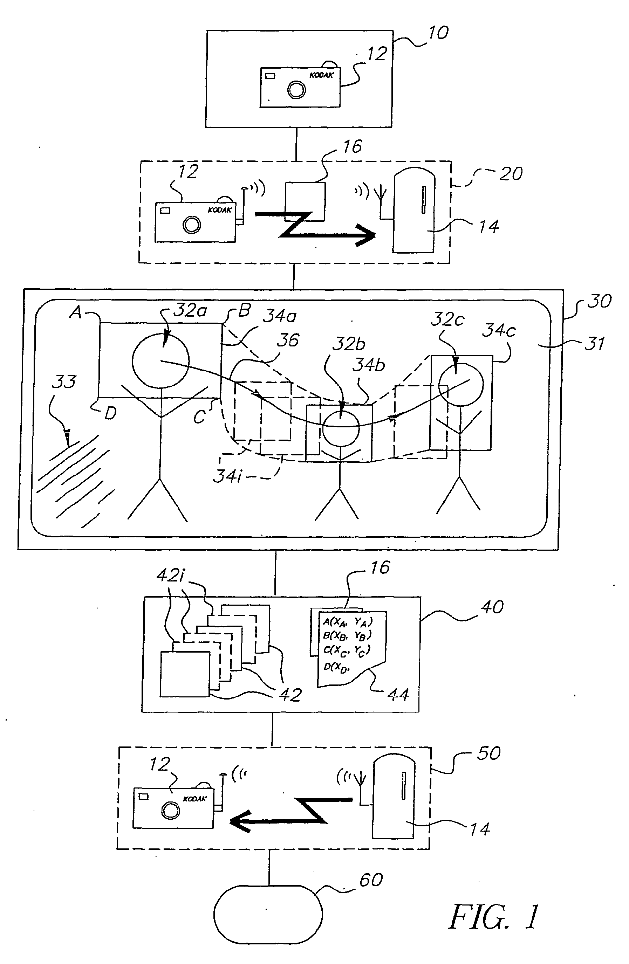

Figure 1 is a representation as a flowchart of the various steps of a method of display in accordance with the invention.

### DETAILED DESCRIPTION OF THE INVENTION

The flowchart of Figure 1 comprises a first step 10 that is the capturing of an image using a digital photographic camera 12. In general digital cameras include a monitoring display screen used for framing, and viewing an image before and after its capture. The viewing screen is not shown in the figure for simplification purposes. The digital camera can in this case be a "PhoneCam" type, i.e. a mobile phone provided with a camera sensor.

Reference 20 of the Figure 1 designates an optional step that consists in transmitting the captured image from the camera 12 to a processing entity 14. More precisely, the image is transmitted as a set of image data 16. The transmission can take place by radio, or by network, using, for example, the telecommunication options offered by a mobile phone, or by a telecommunication unit integrated with the camera. The transmitted image data 16 can correspond to one, or possibly many initial captured images.

Reference 30 of the Figure 1 corresponds to data processing of an image 31 before their display. It comprises especially the identification of zones-of-interest 32a, 32b and 32c, and the selection of image portions 34a, 34b and 34c containing these zones. In the illustrated example, the zones-of-interest are faces. The image portions 34a, 34b and 34c are selected by determining a frame with variable size around each zone-of-interest. The image portions can be set, for example, by the coordinates of four points A, B, C and D that define each frame respectively. To simplify, the points A, B, C and D are only shown in the figure for one of the image portions. Additional image portions 34i that do not contain zones-of-interest, but that are located on a panning path 36 between the zones-of-interest can also be selected. These additional image portions 34i are shown with a dotted line.

The path 36 is determined according to the identified zones-of-interest. It goes, for example, from one zone to the next according to an order depending on the location of the zones, from left to right and from top to bottom. The path can be smoothed, as the figure shows, or correspond simply to the shortest straight lines linking respectively the image portions to be displayed that are nearest in the captured image.

A next step, marked by the reference 40, corresponds to the formation of a sequence of images to be displayed, especially based on the selected image portions. The sequence can be shown as an ordered series of many images, or of image portions to be displayed. The term image or image portion to be displayed here is meant as a batch of digital data defining respectively the image or image portion to be displayed. The data batch of each image portion can be contained in a data file that is separate or not. Further, each data batch corresponding to an image or image portion to be displayed can be linked to data giving a display order. In the Figure 1, the reference 42 is linked with image portions containing zones-of-interest and the reference 42i is linked with additional, interleaved image portions, selected for panning.

As an alternative, the sequence can also have the form of a table 44 that gives for each image portion to be displayed, the coordinates of the frame that defines the image portion in the full image. This is for example the coordinates of four points. Thus the image portion 34a can be defined by the coordinates of points A, B, C and D in the image 31. The table 44 can be accompanied or not with image data defining the full initial image, i.e. the image as captured. According to the addressee equipment of the sequence to be displayed, and according to the existence or not of common zones in the various image portions, the one or the other of the sequence definition methods can be selected, or a combination linking batches of image data (or image portion) and batches of coordinates of image portions. Image sequence definition can be optimized to transmit the smallest possible amount of information.

If the operations of the optional step 20 have been executed, the selection of image portions and the construction of the sequence to be displayed can take place in the remote computer of the processing entity 14. The sequence data are then transmitted from the processing entity to a display device. This is the display command. This step of the method is given in the figure by the reference 50.

The sequence data can be sent to the digital camera used to capture the image, when it is equipped with display means. For example, they can be sent by the telephone communication network or by any other network with telephone access or not. This corresponds to the illustration of the figure. The data can also be transmitted to a separate device, such as, for example, a mobile phone or other equipment provided with display means.

When image sequence data are sent to the camera 12 used to capture the initial image, a copy of the initial image data can be kept in this camera's buffer memory until the receipt of the data relating to the sequence to be displayed. In this case, the sequence display data can amount to the table of image portion coordinates 44. The corresponding image data can effectively be read in the buffer memory and used in the way dictated by the table of coordinates, to be displayed.

The method enabling the display command to be made up can also be implemented by an internal-processor of the camera. In this case steps 20 and 50 can be omitted.

This last step is given in the figure with the reference 60. This is the display step. Each image of the sequence is displayed with an enlargement suited to the available display screen size. In other words, the image is displayed with at least one dimension corresponding to the height or width of the display screen. The calculation of the enlargement suited to the display can be performed either during the display step 60, or previously, during the image data processing in the processing entity 14. A maximum enlargement according to the display capacities is preferably selected.

### CROSS-REFERENCE TO RELATED DOCUMENTS

(1) US-B-6 362 850 - (2) EP-A-1 050 846

## Claims

1. A method of display of at least one digital image, called initial image, on a monitoring screen having a resolution less than the resolution of the initial image, the method comprising the following steps:
a) the automatic identification in the image of at least two zones-of-interest (32a, 32b and 32c),
b) for each zone-of-interest identified, the automatic selection of an image portion (34a, 34b and 34c) containing the zone-of-interest,
c) the formation of a sequence of images to be displayed comprising selected image portions,
d) the command of an enlarged display of the images of the sequence,
**characterized by** the automatic selection of additional image portions (34i) located on a path (36) linking two selected image portions containing zones-of-interest, and the insertion of these additional image portions in the sequence of images to be displayed, so as to simulate panning between the image portions containing zones-of-interest.

2. A method according to Claim 1, wherein, during step d), the display is a full screen display.

3. A method according to Claim 1, wherein the step a) comprises the automatic identification of initial image zones showing faces, the zones showing faces being selected as zones-of-interest (32a, 32b and 32c).

4. A method according to Claim 1, wherein step a) comprises the automatic identification of zones (33) of the initial image showing more or less unified color ranges, and in which zones in addition to the zones showing more or less unified color ranges are selected as zones-of-interest.

5. A method according to Claim 1, comprising the capture of the initial image with a digital camera (12), the transmission of the image to a remote processing entity (14), the execution of at least one of the steps a), b) and c) in the remote processing entity and the sending of a corresponding display command from the processing entity to a display device.

6. A method according to Claim 5, wherein the execution of the three steps a), b), and c) occurs in a remote processing entity (14) and wherein the display command comprises data (44) identifying the image portions to be displayed.

7. A method according to Claim 5, wherein the command comprises image data (42, 42i) relating only to the image portions to be displayed.

8. A method according to Claim 1, wherein the display command comprises, for each image portion, and enlargement ratio instruction.

9. A method according to Claim 1, wherein zones-of-interest are identified in many initial images and wherein the sequence is formed with image portions from many initial images.

10. A method according to Claim 1, wherein the entire initial image is accessorily shown in the sequence.

## Patentansprüche

1. Verfahren zum Anzeigen mindestens eines digitalen Bildes, Ausgangsbild genannt, auf einem Bildschirm mit einer Auflösung, die geringer ist als die Auflösung des Ausgangsbildes, mit den Schritten:
a) automatisches Erkennen mindestens zweier Bereiche von Interesse (32a, 32b und 32c) im Bild,
b) für jeden erkannten Bereich von Interesse automatisches Auswählen eines Bildabschnitts (34a, 34b, 34c) mit dem Bereich von Interesse,
c) Ausbilden einer anzuzeigenden Bildfolge mit ausgewählten Bildabschnitten,
d) Eingeben eines Befehls für eine vergrößerte Anzeige der Bildfolge,
**gekennzeichnet durch** automatisches Auswählen zusätzlicher Bildabschnitte (34i), die auf einem Pfad (36) liegen, der zwei ausgewählte Bildabschnitte mit Bereichen von Interesse verknüpft, und Einfügen der zusätzlichen Bildabschnitte in die Folge der anzuzeigenden Bilder, um ein Schwenken zwischen den Bildabschnitten mit Bereichen von Interesse zu simulieren.

2. Verfahren nach Anspruch 1, worin bei Schritt d) die Anzeige eine Vollbildschirmanzeige ist.

3. Verfahren nach Anspruch 1, worin Schritt a) das automatische Erkennen von Ausgangsbildbereichen umfasst, die Gesichter zeigen, wobei die Gesichter zeigenden Bereiche als Bereiche von Interesse (32a, 32b und 32c) ausgewählt werden.

4. Verfahren nach Anspruch 1, worin Schritt a) das automatische Erkennen von Bereichen (33) des Ausgangsbildes umfasst, die einen mehr oder weniger einheitlichen Farbumfang zeigen, wobei außer den Bereichen mit mehr oder weniger einheitlichem Farbumfang auch andere Bereiche als Bereiche von Interesse ausgewählt werden.

5. Verfahren nach Anspruch 1, mit dem Erfassen des Ausgangsbildes mit einer Digitalkamera (12), der Übertragung des Bildes an eine externe Bearbeitungseinheit (14), der Ausführung von mindestens einem der Schritte a), b) und c) in der externen Bearbeitungseinheit und dem Senden eines entsprechenden Anzeigebefehls von der Bearbeitungseinheit zu einer Anzeigevorrichtung.

6. Verfahren nach Anspruch 5, worin die Ausführung der drei Schritte a), b) und c) in einer externen Bearbeitungseinheit (14) erfolgt und der Anzeigebefehl Daten (44) umfasst, die die anzuzeigenden Bildabschnitte erkennen.

7. Verfahren nach Anspruch 5, worin der Befehl Bilddaten (42, 42i) aufweist, die sich nur auf die anzuzeigenden Bildabschnitte beziehen.

8. Verfahren nach Anspruch 1, worin der Anzeigebefehl für jeden Bildabschnitt einen Vergrößerungsverhältnis-Befehl umfasst.

9. Verfahren nach Anspruch 1, worin Bereiche von Interesse in vielen Ausgangsbildern erkannt werden und die Bildfolge mit Bildabschnitten aus vielen Ausgangsbildern gebildet wird.

10. Verfahren nach Anspruch 1, worin das gesamte Ausgangsbild zusätzlich in der Bildfolge gezeigt wird.

## Revendications

1. Procédé d'affichage d'au moins une image numérique, appelée image initiale, sur un écran de contrôle ayant une résolution inférieure à la résolution de l'image initiale, le procédé comprenant les étapes suivantes :
a) l'identification automatique dans l'image d'au moins deux zones d'intérêt (32a, 32b et 32c),
b) pour chaque zone d'intérêt identifiée, la sélection automatique d'une partie de l'image (34a, 34b et 34c) contenant la zone d'intérêt,
c) la formation d'une séquence d'images devant être affichées comprenant des parties d'images sélectionnées,
d) la commande d'un affichage agrandi des images de la séquence, **caractérisé par** la sélection automatique de parties d'images supplémentaires (34i) situées sur un trajet (36) reliant deux parties d'images sélectionnées contenant les zones d'intérêt, et l'insertion de ces parties d'images supplémentaires dans la séquence d'images devant être affichées, de manière à simuler un mouvement de panoramique entre les parties d'images contenant les zones d'intérêt.

2. Procédé selon la revendication 1, dans lequel, au cours de l'étape d), l'affichage est un affichage en plein écran.

3. Procédé selon la revendication 1, dans lequel l'étape a) comprend l'identification automatique de zones de l'image initiale représentant des visages, les zones représentant des visages étant sélectionnées en tant que zones d'intérêt (32a, 32b et 32c).

4. Procédé selon la revendication 1, dans lequel l'étape a) comprend l'identification automatique des zones (33) de l'image initiale représentant des plages de couleurs plus ou moins unifiées, et dans laquelle des zones en plus des zones représentant des plages de couleurs plus ou moins unifiées sont sélectionnées en tant que zones d'intérêt.

5. Procédé selon la revendication 1, comprenant l'acquisition de l'image initiale avec un appareil de prise de vues numérique (12), la transmission de l'image à une entité de traitement distante (14), l'exécution d'au moins une des étapes a), b) et c) dans l'entité de traitement distante et l'envoi d'une commande d'affichage correspondante de l'unité de traitement à un dispositif d'affichage.

6. Procédé selon la revendication 5, dans lequel l'exécution des trois étapes a), b) et c) se produit dans une entité de traitement distante (14) et dans lequel la commande d'affichage comprend des données (44) identifiant les parties d'images devant être affichées.

7. Procédé selon la revendication 5, dans lequel la commande comprend des données d'image (42, 42i) ne se rapportant qu'à des parties d'images devant être affichées.

8. Procédé selon la revendication 1, dans lequel la commande d'affichage comprend, pour chaque partie d'image, une instruction de taux d'agrandissement.

9. Procédé selon la revendication 1, dans lequel les zones d'intérêt sont identifiées dans de nombreuses images initiales et dans lequel la séquence est formée avec les parties d'images provenant de nombreuses images initiales.

10. Procédé selon la revendication 1, dans lequel l'image initiale entière est accessoirement représentée dans la séquence.
